# EUROPÄISCHE PATENTSCHRIFT

(11) **EP 2 242 026 B1**
(45) Veröffentlichungstag und Bekanntmachung des Hinweises auf die Patenterteilung: **05.05.2021**
(21) Anmeldenummer: 10001076.8
(22) Anmeldetag: 03.02.2010
(51) Int. Cl.: B60W 50/00, G07C 5/08, B60W 50/14, B60W 40/02

(54) **Verfahren zur Umsetzung definierter Fahrweisen**
Method for converting defined operation modes
Procédé pour mettre en oeuvre des manières de conduire bien définies

(30) Priorität: 17.04.2009 DE 102009017574
(43) Veröffentlichungstag der Anmeldung: 20.10.2010
(73) Patentinhaber: MAN Truck & Bus SE, 80995 München (DE)
(72) Erfinder: Mohra, Holger, 80805 München (DE); Krückl, Wolfgang, 85229 Markt Indersdorf (DE)
(74) Vertreter: Liebl, Thomas

(56) Entgegenhaltungen:
- EP-A1- 1 302 356
- EP-A1- 1 811 481
- WO-A1-2008/107514
- DE-A1- 10 037 849
- DE-A1- 10 326 593
- GB-A- 2 452 579
- US-A1- 2009 093 927

## Beschreibung

Die vorliegende Erfindung betrifft ein Verfahren zur Ausgabe wenigstens einer Information an einen Fahrer, die zur Umsetzung einer definierten und gewünschten verbrauchsoptimierten Fahrweise in einem Fahrzeug, insbesondere in einem Nutzfahrzeugen, geeignet ist. Die Erfindung findet insbesondere Anwendung im Automobilbereich, wie beispielsweise dem Nutzfahrzeugsektor.

Aus der DE 100 56 756 A1 ist eine Fahrerkonditionierung durch Fahrtinformationen über die Fahrzeuge in einem lokalen verkehrlichen Umfeld bekannt. Dabei werden Fahrweisen eines Fahrers klassifiziert, indem fahrweisenindikative Messgrößen, so genannte Fahrstilinformationen aufgenommen und durch einen Vergleich mit Referenzwerten Fahrweisen-Kennziffern ermittelt werden. Dazu werden die Referenzwerte durch Verwendung von Fahrstilinformationen von Fahrzeugen in einer Umgebung des betrachteten Fahrzeuges gewonnen. Das bekannte Verfahren ist sehr aufwändig, da Fahrstilinformationen einer Vielzahl von Fahrzeugen in der Umgebung des betrachteten Fahrzeuges mit sehr hohem Aufwand ermittelt, übertragen und ausgewertet werden müssen.

Aus der EP 1 302 356 A1 ist ein Verfahren zum Erzeugen eines Geschwindigkeitsplans für wenigstens den gegenwärtigen und aufkommenden Straßenabschnitt bekannt, bei dem Fahrzeugpositionsinformationen empfangen werden und Karteninformationen aus einer Kartendatenbank basierend auf den Positionsinformationen und Informationen hinsichtlich früheren Fahrerverhaltens für einen ähnlichen Straßenabschnitt aus einer Fahrerinformationsdatenbank extrahiert werden.

Die DE 103 26 593 A1 beschreibt ein Verfahren zur Informationsausgabe an einen Fahrer. Dabei werden Daten zugrunde gelegt, die eine Fahrstrategie eines Fahrers betreffen, wobei unter Fahrstrategie das strategische Fahrverhalten des Fahrers in bestimmten Situationen zu verstehen ist.

Die WO 2008/107514 A1 zeigt ein Datenerfassungssystem bekannt, mittels dem Informationen über eine Fahrzeugbedienung gesammelt werden. Die Daten werden von dem Fahrzeug an eine zentrale Steuereinheit weitergeleitet, die außerhalb des Fahrzeugs angeordnet ist, und in der zentralen Steuereinheit werden die empfangenen Daten mit Daten verglichen, die von anderen Fahrzeugen empfangen wurden, oder mit Daten, die auf der gleichen Strecke bei früheren Fahrten empfangen wurden, wodurch ein Fahrverhalten festgestellt wird.

Aufgabe der vorliegenden Erfindung ist es daher ein Verfahren und eine Vorrichtung anzugeben, welche die bekannten Nachteile beseitigt und insbesondere die Umsetzung einer gewünschten Fahrweise durch den Fahrer eines Fahrzeuges in besonders einfacher Weise ermöglicht.

Diese Aufgaben werden mit einem Verfahren gemäß den Merkmalen des Patentanspruchs 1 sowie mit einem Nutzfahrzeug nach Anspruch 8 gelöst. Weitere vorteilhafte Ausgestaltungen der Erfindung sind in den abhängig formulierten Patentansprüchen angegeben. Es ist darauf hinzuweisen, dass die in den abhängig formulierten Patentansprüchen einzeln aufgeführten Merkmale in beliebiger technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausführungsbeispiele der Erfindung dargestellt werden.

Zur Lösung der vorstehenden Aufgabenstellung ist das eingangs genannte Verfahren zur Umsetzung einer vorbestimmten Fahrweise bei Fahrzeugen, insbesondere bei Nutzfahrzeugen, durch folgende Schritte gekennzeichnet:
a) Definieren der gewünschten verbrauchsoptimierten Fahrweise, wobei die Definition der Fahrweise durch Aktivierung einer einzelnen in der Steuerungseinrichtung hinterlegten verbrauchsoptimierten Fahrweise oder durch Auswahl einer verbrauchsoptimierten Fahrweise aus einer Mehrzahl von, in der Steuerungseinrichtung, hinterlegten verbrauchsoptimierten Fahrweisen erfolgt;
b) Erkennen einer räumlich umgrenzten zukünftigen Situation durch die Steuerungseinrichtung, bei der ein Bereich bis 1000 m vor dem Fahrzeug erfasst wird, oder Erkennen einer zeitlich umgrenzten zukünftigen Situation durch die Steuerungseinrichtung, bei der ein Bereich bis 60 Fahrsekunden vor dem Fahrzeug erfasst wird;
c) Bestimmen wenigstens eines ersten Ist-Parameters, wobei als wenigstens ein erster Ist-Parameter der Treibstoffverbrauch erfasst wird, der unter Beibehaltung der bisherigen Fahrweise für die erkannte zukünftige Situation zu erwarten ist, wobei zur Bestimmung des ersten Parameters nur fahrzeugspezifische Kenngrößen oder Messwerte, Fahrwegsinformationen und Verkehrsinformationen verwendet werden;
d) Bestimmen wenigstens eines zweiten Ziel-Parameters für diese Situation, wobei als wenigstens ein zweiter Ziel-Parameter der Treibstoffverbrauch erfasst wird, der sich bis zum Ende der erkannten Situation einstellt, wenn die wenigstens eine Information durch den Fahrer vollständig umgesetzt wird, wobei zur Bestimmung des zweiten Parameter nur fahrzeugspezifische Kenngrößen oder Messwerte, Fahrwegsinformationen und Verkehrsinformationen verwendet werden;
e) Bilden wenigstens einer Differenz aus dem ersten und zweiten Parameter;
f) Wenn eine Abweichung vom zweiten Ziel-Parameter festgestellt wird, ausgeben der wenigstens einer Information an den Fahrer durch die Ausgabeeinrichtung in Abhängigkeit von der wenigstens räumlich oder zeitlich umgrenzten zukünftigen Situation.

Gemäß der vorliegenden Erfindung wird im ersten Schritt des Verfahrens eine gewünschte verbrauchsoptimierte Fahrweise definiert. Dies kann beispielsweise durch den Fahrer oder den Disponenten einer Spedition erfolgen. Die Definition der Fahrweise erfolgt erfindungsgemäß durch Aktivierung einer einzelnen, beispielsweise in einer Steuerungseinrichtung oder Speichereinrichtung hinterlegten verbrauchsoptimierten Fahrweise oder durch Auswahl einer Fahrweise aus einer Mehrzahl von hinterlegten verbrauchsoptimierten Fahrweisen. Ausgehend von der definierten und gewünschten verbrauchsoptimierten Fahrweise wird eine räumlich und/oder zeitlich umgrenzte zukünftige Situation erkannt. Unter einer zukünftigen Situation ist dabei eine in naher Zukunft zu erwartende Verkehrssituation zu verstehen, in der sich das Fahrzeug befinden wird bzw. auf die das Fahrzeug zusteuert. Diese zukünftigen Situationen sind bewusst räumlich bzw. zeitlich eng umgrenzt, da die vorliegende Erfindung erkannt hat, dass auch solche räumlich und/oder zeitlich eng umgrenzten zukünftigen Situationen dazu geeignet sind die Fahrweisen in der gewünschten Weise zu definieren und zu beeinflussen. Der damit erzielte Vorteil, welcher in der räumlichen und/oder zeitlichen engen Umgrenzung liegt, besteht unter anderem in einer sehr stark vereinfachten Datengewinnung. So reichen einfach verfügbare Daten, wie beispielsweise Daten über einen zukünftigen Straßenverlauf, Straßentyp, Geschwindigkeitsbegrenzungen, Ampelanlagen, Personen, Hindernisse, vorausliegende Steigungs- oder Gefällestrecken und vorausfahrender Verkehr in Verbindung mit bekannten feststehenden oder am Fahrzeug gemessenen fahrzeugspezifischen Kenngrößen aus, um das vorliegende Verfahren auszuführen. Die so begrenzten Daten sind in besonders einfacher Weise verfügbar, beispielsweise aus Navigationsdatenbanken, in denen Straßenverläufe und Höhenprofile hinterlegt sind, der vom Fahrer oder dem Navigationssystem gewählten Streckenführung, Abstandsensoren oder Kameras bzw. Stereokameras, welche den vorausfahrenden Verkehr überwachen und die ohnehin bekannten fahrzeugspezifischen Kenngrößen. Unter fahrzeugspezifischen Kenngrößen sind alle Werte zu verstehen, die für ein bestimmtes Fahrzeug in gespeicherter Form bekannt sind oder speziell an einem Fahrzeug gemessen oder ermittelt werden. Bekannte fahrzeugspezifische Kenngrößen sind beispielsweise Fahrzeugmaße, Fahrzeuggewicht, aktuelle Steigungen, aktivierte Systeme, wie etwa Tempomat oder Klimaanlage, Motorkennlinien, die Leistungs- oder Drehmomentverläufe angeben, Schaltkennlinien des Getriebes oder eine mittels GPS-Empfängers ermittelte Fahrzeugposition. Gemessene Werte sind beispielsweise aber auch in Echtzeit ermittelte Verbrauchswerte und Geschwindigkeiten.

Wird nun eine zukünftige Situation erkannt, wie beispielsweise das Heranfahren an den Beginn einer Steigungsstrecke, das herannahende Ende einer Steigungsstrecke an einer Bergkuppe, eine Autobahnausfahrt, ein Stauende oder eine rote Ampelanlage, um nur einige beispielhaft anzuführen, wird dann die Bestimmung wenigstens eines ersten und eines zweiten Parameters vorgenommen. Dazu wir im nächsten Schritt zunächst wenigstens ein geeigneter erster Ist-Parameter ermittelt, welcher für die erkannte zukünftige Situation und die definierte Fahrweise kennzeichnend ist. Dieser erste Ist-Parameter ist erfindungsgemäß der Kraftstoffverbrauch, der unter Beibehaltung der bisherigen Fahrweise für die erkannte zukünftige Situation zu erwarten ist.

Zeitlich unmittelbar anschließend daran oder parallel dazu wird ein zweiter Ziel-Parameter für diese Situation bestimmt. Der Ziel-Parameter gibt erfindungsgemäß den Treibstoffverbrauch an, der sich bis zum Ende der erkannten Situation einstellt, wenn die nachfolgend ausgegebenen Informationen durch den Fahrer vollständig umgesetzt würden. Als nächster Schritt wird dann eine Differenz aus dem ersten und zweiten Parameter ermittelt, was erfindungsgemäß der möglichen Treibstoffeinsparung entspricht.

Im nächsten Schritt erfolgt dann die Ausgabe einer Information an den Fahrer. Hierbei kann die Ausgabe der Differenz als Information in unterschiedlicher Weise erfolgen. Erfindungsgemäß wird als Information wenigstens eine Handlungsempfehlung ausgegeben. So können der erste Ist-Parameter und zweite Ziel-Parameter als absolute Werte nebeneinander dargestellt werden, um dem Fahrer die Differenz zwischen beiden Parametern aufzuzeigen. Alternativ ist es aber auch möglich die Differenz zu berechnen und nur als einzelnen Differenzwert in Alleinstellung oder zusammen mit dem ersten und/oder zweiten Parameter auszugeben. Bereits hierdurch erfährt der Fahrer zeitnah durch die stets aktuelle Information in Form der Differenz eine Rückmeldung wie gut die vorgegebene Fahrweise eingehalten wird. Die Anzeige der Information und insbesondere der beschriebenen Differenz dient somit als Motivation für den Fahrer. Eine Information ist erfindungsgemäß eine Handlungsempfehlung.

Zusätzlich wird dem Fahrer ebenfalls gleichzeitig oder zeitnah wenigstens eine weitere Information beispielsweise in Form einer Handlungsempfehlung ausgegeben werden, die in Abhängigkeit von der wenigstens räumlich und/oder zeitlich umgrenzten zukünftigen Situation formuliert ist. So kann beim Heranfahren an eine erkannte rote Ampel frühzeitig die Empfehlung gegeben werden, das Fahrzeug möglichst im reinen Schubbetrieb ausrollen zu lassen. Gleiches gilt vor dem Erreichen eines Steigungsendes. Ein anderes Beispiel für eine Handlungsempfehlung kann beispielsweise ein frühzeitiges Herunterschalten in einen niedrigeren Fahrgang rechtzeitig vor dem Beginn einer Steigungsstrecke sein, wodurch übermäßige Geschwindigkeitsverluste durch einen Schaltvorgang in der Steigungsstrecke verhindert werden.

Durch die Ausgabe wenigstens einer Information in Form einer Handlungsempfehlung an einen Fahrer, wird dieser somit in die Lage versetzt, die vorgegebene und definierte Fahrweise vollständig oder zumindest weitestgehend umzusetzen. Unter Handlungsempfehlung ist in diesem Zusammenhang, die Angabe einer Empfehlung zu verstehen, welche ein konkretes Handeln des Fahrers betrifft. Beispiele für solche konkreten Handlungen sind etwa ein Gangwechsel, Systembedienungen von Tempomat, Klimaanlage etc, ein Beschleunigen oder Verzögern des Fahrzeuges, ein Übergang in einen Schubbetrieb ohne Motorbeschleunigung und ähnliche Handlungen. Unter einer Information ist bei diesem Beispiel jede Art von Handlungsempfehlung zu verstehen, deren unmittelbare Umsetzung die gewünschte Fahrweise verwirklicht. Grundsätzlich kann die Information aufgeteilt nach Kategorien ausgegeben werden als Status, Assistenz und/oder Motivation. Der Status beinhaltet konkrete Angaben, wie Parameter, Fahrzeugkenngrößen, Geschwindigkeit, Gang, Verbrauch etc. Die Assistenz umfasst sämtlich Information, die keiner weiteren Interpretation des Fahrers bedürfen und von diesem sofort umsetzbar sind. Die Motivation enthält schließlich Informationen, welche den Fahrer zum Befolgen der Handlungsempfehlungen veranlassen und die Einhaltung der gewünschten Fahrweise bewirken. Zusätzlich kann neben einer imperativen Handlungsempfehlung, eine Begründung dazu eingesetzt werden, um das Verständnis des Fahrers und die Akzeptanz des Systems zu verbessern.

Erfindungsgemäß ist vorgesehen, dass wenigstens eine verbrauchsoptimierte Fahrweise vorgegeben wird. Der Fahrer oder der Disponent einer Spedition können so eine besonders verbrauchsarme Fahrweise definieren, um eine Fahrt nach den jeweils gegebenen Rahmenbedingungen in optimierter Weise durchzuführen.

Erfindungsgemäß wird als Parameter wenigstens der absolute oder wegstreckenbezogene Treibstoffverbrauch erfasst. Hierdurch ist es möglich beispielsweise den durchschnittlichen Treibstoffverbrauch in Liter pro 100 Kilometer, oder den absoluten Treibstoffverbrauch zu vergleichen. Der Fahrer erhält somit Informationen, wie sein derzeitiger Treibstoffverbrauch nach dem Durchfahren mehrerer Situationen tatsächlich ist, und welchen Treibstoffverbrauch er bei Beachtung sämtlicher ausgegebenen Informationen bzw. Handlungsempfehlungen hätte erzielen können. Es ist zudem vorteilhaft, die Fahrt durchgehend anhand sich lückenlos aneinander anschließender Situationen zu überwachen. Hierbei können die Parameter bzw. Differenzen über die gesamte Fahrtdauer durch Addition bzw. je nach Berechnungsweise auch durch Integration entsprechend ermittelt werden.

Erfindungsgemäß werden zur Bestimmung der ersten und zweiten Parameter nur fahrzeugspezifische Kenngrößen oder Meßwerte, Fahrwegsinformationen und lokale Verkehrsinformationen, etwa durch Fahrzeug zu Fahrzeug Kommunikation oder Kameraüberwachung, verwendet. Dies hat den Vorteil, dass diese Informationen, Messwerte und Kenngrößen in besonders einfacher Weise verfügbar sind. Fahrwegsinformationen sind beispielsweise in Form von Navigations-DVD's in besonders genauer und preiswerter Form verfügbar. Darüber hinaus können fahrzeugspezifische Kenngrößen für ein Fahrzeug einmalig in einer Datenbank, wie einer Navigations-DVD, hinterlegt werden oder fahrzeugspezifische Messwerte gegebenenfalls während der Fahrt aktuell bestimmt werden. Die Ausführung des erfindungsgemäßen Verfahrens ist somit auch ohne zusätzliche Informationsübertragung von außerhalb und damit in besonders einfacher Weise möglich.

In der Praxis hat sich besonders bewährt, wenn als Handlungsempfehlung zumindest eine Schaltempfehlung, Beschleunigungsempfehlung, Bedienhinweis für Geschwindigkeitsregelsysteme oder Geschwindigkeitsempfehlung ausgegeben wird. Diese Informationen betreffen die häufigsten von Fahrer auszuführenden Handlungen. Darüber hinaus kann zusätzlich die Information wenigstens als Status oder Motivation ausgegeben werden. In einem Status werden dabei Angaben über das Fahrzeug bereitgestellt, die beispielsweise die Geschwindigkeit, den aktuellen Verbrauch, den gewählten Gang und ähnliches umfassen können. In der Assistenz wird dem Fahrer bei Bedarf eine Handlungsempfehlung ausgegeben, mit der er die definierte und gewünschte Fahrweise besser umsetzen kann. Wahlweise oder zusätzlich kann dann in einer Motivationszeile dem Fahrer die Auswirkung seines Handelns angezeigt werden, in dem beispielsweise eine mögliche Treibstoffeinsparung als absoluter Wert beispielsweise in einer Volumeneinheit oder als streckenbezogener Verbrauch in beispielsweise Liter pro 100 Kilometer ausgegeben wird. Hierdurch erkennt der Fahrer unmittelbar das mögliche Potential, welches in der Befolgung der Handlungsempfehlungen liegt und bei Nichtbeachtung die damit verbundenen Konsequenzen in Form eines Mehrverbrauches oder alternativ auch eines Zeitverlustes.

Bei einer anderen bevorzugten Ausführungsform der Erfindung ist vorgesehen, dass als Motivation ein absoluter Wert ausgegeben wird. Hierbei kann der absolute Wert beispielsweise als Treibstoffeinsparung in einer Mengeneinheit und/oder einer Geldeinheit angegeben werden. Alternativ ist es möglich, dass der absolute Wert als Fahrerprämie in einer Geldwährung angegeben wird. Weiterhin kann der absolute Wert auch als Zeiteinsparung in einer Zeiteinheit angegeben werden. Grundsätzlich ist es dabei möglich, sämtliche Werte in zwei verschiedenen Arten anzugeben. Da der erste und zweite Parameter für jede Situation bekannt sind, kann die Differenz als ein einziger Differenzwert ausgegeben werden. Bei der zweiten Art können der erste Parameter und der zweite Parameter gleichzeitig angezeigt werden, wodurch dem Fahrer der theoretisch mögliche Zielparameter und der tatsächlich erreichte Ist-Parameter gleichzeitig vor Augen geführt werden. Hierdurch ergibt sich eine zusätzliche Motivation des Fahrers, die gegebenen Handlungsempfehlungen möglichst vollständig umzusetzen.

Insbesondere kann auch die Ausgabe einer Fahrerprämie in einer Geldeinheit dazu genutzt werden, dem Fahrer durch den pekuniären Aspekt zu einer Umsetzung der Handlungsempfehlungen und damit zu einer möglichst optimierten Fahrweise zu motivieren.

Zur Erhöhung der Sicherheit und der Akzeptanz bei den Fahrern ist weiterhin vorgesehen, dass in vorteilhafter Weise bei Geschwindigkeiten von ungleich Null fahrspezifische Informationen ausgegeben werden. Bei einer Geschwindigkeit von ungleich Null ist es beispielsweise sinnvoll nur fahrspezifische Handlungsempfehlungen auszugeben, welche konkretes Handeln vom Fahrer erfordern und eine konkrete Motivation bei einem Fahrer bewirken, wie beispielsweise das Ausgeben von aktuellen Assistenzen in Form von Handlungsanweisungen, die Aktionen des Fahrers erfordern oder einer Motivation in Form einer Fahrerprämie, welche die Befolgung der Assistenz verbessert. Im Übrigen soll der Fahrer während der Fahrt nach Möglichkeit von weiteren nicht unbedingt benötigten Informationen entlastet werden. Zusätzlich kann eine Rückmeldungspriorisierung vorgenommen werden, so dass der Fahrer beispielsweise bei Gefahren- oder Belastungssituationen, wie Vollbremsungen, keine Rückmeldungen erhält.

Bei einer bevorzugten Weiterbildung der Erfindung ist vorgesehen, dass bei Geschwindigkeiten von Null dann aber weiterführende Handlungsempfehlungen ausgegeben werden. So kann z. B. beim Eintreten des Motorstillstands eine ausführlichere Analyse und Ausgabe der Ergebnisse als Assistenz an den Fahrer erfolgen. Hierdurch kann beispielsweise das Fahrverhalten des Fahrers in übergreifender Form bewertet und weiteres Verbesserungspotential aufgezeigt werden. Bei kurzen Stopps mit laufendem Motor können etwa an einer roten Ampel auch Handlungsempfehlungen gegeben werden, welche die aktuelle Fahrt betreffen und mehrere zurückliegende Situationen auswertend berücksichtigen, die einen Fahrer während der Fahrt aber zu sehr ablenken würden. Bei Fahrtende kann der Fahrer dann ein Resumee abfragen, welches Angabe zu nicht oder nur teilweise befolgten Handlungsempfehlungen und deren Häufung macht. Dies kann auch mit einem Lob oder Tadel durch das System verbunden sein.

Ein weiterer Vorteil der vorliegenden Erfindung ist darin begründet, dass das Verfahren fahrspezifisch und/oder fahrzeugspezifisch ausgeführt wird. Für die Verwendung von elektronischen Tachokarten können Informationen über die Einhaltung der Fahrweise, Assistenzen und Motivationen beispielsweise fahrerspezifisch gespeichert oder ausgewertet werden. Hierdurch besteht die Möglichkeit zu einem späteren Zeitpunkt Stärken und Schwächen eines Fahrers zu ermitteln bzw. fahrzeugspezifische Kenngrößen, wie Abweichungen zu einem Normverbrauch oder erworbene Prämien zu ermitteln.

Erfindungsgemäß wird von der zukünftigen Situation ein Bereich bis 1 000 Meter oder 60 Fahrsekunden, vorzugsweise bis 500 Meter oder 30 Fahrsekunden, vor dem Fahrzeug erfasst. Die eng umgrenzte Vorschau auf zukünftige Situationen reduziert die zur Ausführung des erfindungsgemäßen Verfahrens benötigten Daten erheblich, so dass diese im Fahrzeug gespeichert oder vom Fahrzeug selbst ermittelt werden können. Unter Fahrsekunden wird dabei ein Bereich auf der voraus liegenden Fahrstrecke verstanden, der innerhalb einer entsprechenden Anzahl von Sekunden vom Fahrzeug durchfahren werden wird. So entsprechen 10 Fahrsekunden beispielsweise der Strecke, welche das Fahrzeug innerhalb der nächsten 10 Sekunden zurücklegen wird.

Die Ausgabe einer Information kann optisch, akustisch und/oder haptisch erfolgen.

Schließlich beansprucht die folgende Erfindung ein Nutzfahrzeug mit einer Steuerungs- und Ausgabeeinrichtung zur Ausführung des Verfahrens nach Anspruch 1, um eine zufriedenstellende Umsetzung der definierten Fahrweise zu erreichen.

Die Ausgabeeinrichtung weist Mittel zur Ausgabe eines Status, einer Assistenz und einer Motivation auf. Die Ausgabe kann dabei wahlweise akustisch, optisch und/oder auch haptisch erfolgen.

Die Ausgabeeinrichtung weist Anzeigemittel zur Ausgabe der wenigstens einen Information an den Fahrer auf.

Zur Erhöhung der Akzeptanz bei den Fahrern ist erfindungsgemäß außerdem vorgesehen, dass die Ausgabe von Informationen nur dann erfolgt, wenn Abweichungen von den möglichen zweiten Zielparametern festgestellt werden, das System andernfalls aber keine Information ausgibt und lediglich überwachend im Hintergrund arbeitet. Dies führt zu einer erhöhten Akzeptanz des Systems bei den Fahrern und ermöglicht längere Laufzeiten, wodurch Langzeiteinsparungen und Langzeitlernerfolge ermittelbar sind. Weiterhin kann bei bevorzugten Ausführungsformen vorgesehen werden, dass Toleranzgrenzen vorgegeben werden, die einen den Zielparametern zugeordneten Toleranzbereich angeben. Erst bei Überschreiten der Grenzen des Toleranzbereiches wird dann eine Ausgabe von Informationen an den Fahrer aktiviert. In diesem Zusammenhang ist es auch möglich, den Toleranzbereich durch verschiedene Toleranzgrenzen mit steigender Qualifizierung des Fahrers auszuweiten, wodurch bei qualifizierten Fahrern die Anzahl der Systemaktivierungen aufgrund von Fehlverhalten spürbar verringert wird. Schließlich ist es besonders im Zusammenhang mit der Anzeige von Fahrerprämien sinnvoll, den Motivationsbereich mit der angezeigten Motivation zumindest optisch durchgehend zu aktivieren, um somit den Fahrer an seinen persönlichen Erfolg zu erinnern.

Weiterhin sind die erfindungemäße Vorrichtung und das erfindungsgemäße Verfahren auch mit einem Sicherheitssystem, wie beispielsweise einem Spurhalte- oder Bremsassistenten, kombinierbar. Zudem kann die Ausgabeeinrichtung abschaltbar und/oder veränderbar in Intensität oder Lautstärke sein, so dass eine Fahreradaption ermöglicht wird.

Die Erfindung und das technische Umfeld werden nachfolgend anhand der Figuren näher erläutert. Es ist darauf hinzuweisen, dass die Figuren besonders bevorzugte Ausführungsformen der Erfindung zeigen, auf die sie jedoch nicht beschränkt sind. In der Zeichnung zeigt schematisch:
- Fig. 1: ein erfindungsgemäßes Nutzfahrzeug in einer Seitenansicht;
- Fig. 2: eine schematische Abfolge der erfindungsgemäßen Verfahrensschritte;
- Fig. 3: eine Draufsicht auf den Fahrweg eines erfindungsgemäßen Fahrzeuges mit umgrenzter zukünftiger Situation; und
- Fig. 4: eine Anzeigeeinrichtung mit Status, Assistenz und Motivation.

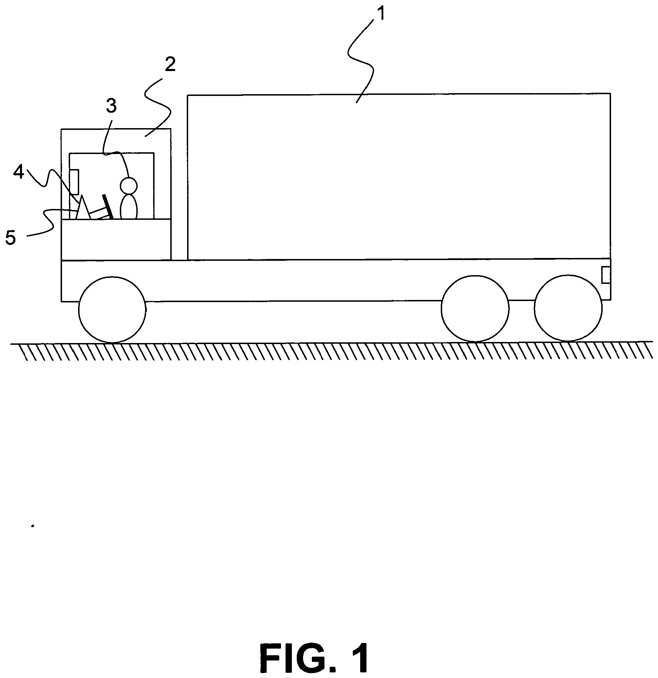

In Fig. 1 ist ein erfindungsgemäßes Nutzfahrzeug 1 in einer schematischen Seitenansicht dargestellt. Am vorderen Ende des Nutzfahrzeugs 1 befindet sich ein Fahrerhaus 2 in dem ein Fahrer 3 das Fahrzeug steuert. Im Bereich des Fahrerhauses 2 ist eine Ausgabeeinrichtung 4 angeordnet, welche dem Fahrer 3 auf optischem, akustischem oder haptischem Weg Informationen bereitstellt, um eine definierte und gewünschte verbrauchsoptimierte Fahrweise umzusetzen. In die Ausgabeeinrichtung 4 ist eine Steuerungseinrichtung 5 integriert, welche die zur Bestimmung der auszugebenden Information benötigten Fahrwegsinformation, Verkehrsinformationen und fahrzeugspezifischen Kenngrößen und Messwerte umfasst, auswertet und mittels der Ausgabeeinrichtung 4 ausgibt. Vorzugsweise handelt es sich dabei um eine Datenverarbeitungsanlage, auf der ein vorgegebenes Programm ausgeführt wird.

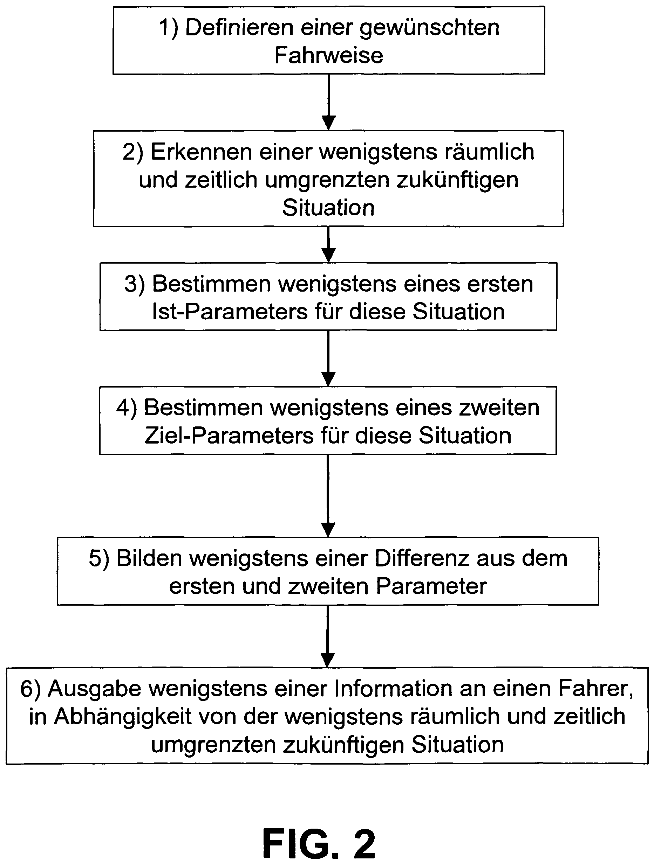

In Fig. 2 sind die Verfahrensschritte des erfindungsgemäßen Verfahrens dargestellt, wobei zunächst eine gewünschte Fahrweise im ersten Verfahrensschritt definiert wird. Diese Definition kann durch den Fahrer oder beispielsweise einen Disponenten erfolgen. Im zweiten Schritt wird durch die Steuerungseinrichtung eine räumlich und zeitlich umgrenzte zukünftige Situation erkannt. Hierbei handelt es sich um eine Situation, in der sich das Fahrzeug in naher Zukunft befinden wird. In der Regel handelt es sich um eine Verkehrssituation, welche das Fahrzeug beispielsweise in den vorausliegenden 500 Metern Fahrstrecke oder den nächsten 30 Fahrsekunden erwarten wird. Zu dieser Situation, die beispielsweise ein einfaches Geradeausfahren auf einer Autobahn, eine Annäherung an eine rote Ampel, das Erreichen des Beginns oder Endes einer Steigungsstrecke oder die Annäherung an ein langsameres vorausfahrendes Fahrzeug bilden kann, wird nun ein erster geeigneter Ist-Parameter bestimmt. Erfindungsgemäß wird hierbei der Treibstoffverbrauch als Parameterart ausgewählt, da dieser bei Beibehaltung der Fahrweise für diese Situation mit einfachen Mitteln bestimmbar ist. Der erste Parameter gibt Auskunft über den zu erwartenden Verbrauch für diese Situation, wenn der Fahrer keine weitere Veränderung vornimmt. Parallel oder zeitlich sehr nah dazu wird ein zweiter Zielparameter für diese Situation bestimmt, der angibt welcher reduzierte Treibstoffverbrauch möglich ist, wenn geeignete Maßnahmen eingeleitet werden. Solche Maßnahmen sind beispielsweise das frühzeitige Verzögern oder Beschleunigen und eine passende Gangwahl, Nutzung des Tempomat etc. Im fünften Schritt wird aus dem ersten und zweiten Parameter eine Differenz gebildet, die anschließend im sechsten Schritt zur Ausgabe wenigstens einer Information an einen Fahrer in Abhängigkeit von der ermittelten wenigstens einen Differenz führt. Erkennt das Fahrzeug beispielsweise eine voraus liegende rote Ampel, so kann der Fahrer angewiesen werden das Fahrzeug sofort ausrollen zu lassen, anstatt die Geschwindigkeit bis unmittelbar vor der roten Ampel beizubehalten und dann erst herunterzubremsen. Auf einer Geradeausfahrt ohne Beschleunigung und Verzögerung kann die Handlungsempfehlung beispielsweise die Wahl eines günstigeren Ganges oder die Nutzung des Tempomat umfassen, wenn sich dadurch der Kraftstoffverbrauch senken lässt.

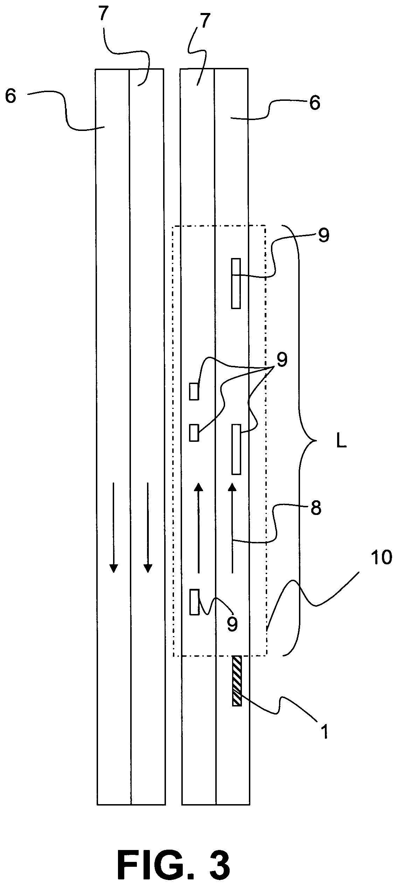

In Fig. 3 ist eine Draufsicht auf zwei entgegengesetzte Fahrbahnen 6 dargestellt, die jeweils zwei Fahrspuren 7 aufweisen. Das erfindungsgemäße Nutzfahrzeug 1 bewegt sich dabei in Fahrtrichtung 8 zusammen mit anderen Fahrzeugen 9. Vor dem Fahrzeug ist mit einer strichpunktierten Linie der Bereich 10 der räumlich und zeitlich umgrenzten zukünftigen Situation dargestellt. Das heißt, das erfindungsgemäße Nutzfahrzeug wird bei Fortsetzung der Fahrt innerhalb der nächsten Fahrtsekunden den Bereich 10 durchfahren. Der Bereich 10 hat dabei eine Länge L, die beispielsweise in Metern angegeben sein kann. Alternativ kann die Länge L des Bereichs 10 auch in Fahrtsekunden angegeben werden. In dem Beispiel beträgt die Länge des Bereichs ein Vielfaches der Fahrzeuglänge und würde in der Praxis beispielsweise einem Bereich von 200 bis 400 Metern vor dem Fahrzeug entsprechen.

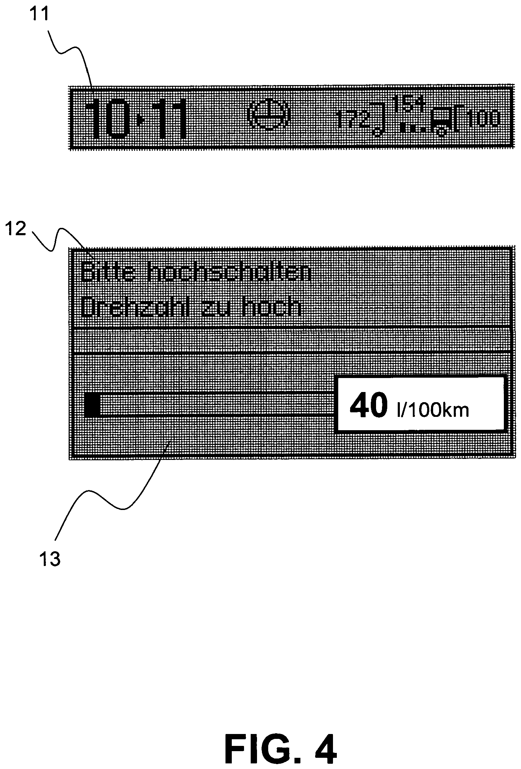

In Figur 4 ist schließlich eine Ausgabeeinrichtung 4 mit einem Status 11, einer Assistenz 12 und einer Motivation 13 dargestellt. Bei der Motivation 13 ist am linken Ende des horizontalen Balkens eine kleine Fläche erkennbar, die angibt, welcher Verbrauch während der zurückliegenden Situationen möglich gewesen wäre. Hierbei handelt es sich um den Zielparameter. Am rechten Ende des horizontalen Balkens findet sich die Angabe des tatsächlichen Verbrauchs von 401/100km, welches dem Ist-Parameter entspricht. Der Abstand zwischen beiden Angaben entspricht dabei der Differenz, die für den Fahrer sofort ersichtlich ist und zur besseren Umsetzung der darüber angezeigten Assistenz 12 motiviert, wobei als Information immer wenigstens eine Handlungsempfehlung ausgegeben wird.

### Bezugszeichenliste:

1 Nutzfahrzeug
2 Fahrerhaus
3 Fahrer
4 Ausgabeeinrichtung
5 Steuerungseinrichtung
6 Fahrbahn
7 Fahrspur
8 Fahrtrichtung
9 anderes Fahrzeug
10 Bereich
11 Status
12 Assistenz
13 Motivation

## Patentansprüche

1. Verfahren zur Ausgabe wenigstens einer Information an einen Fahrer (3), die zur Umsetzung einer definierten und gewünschten verbrauchsoptimierten Fahrweise in einem Fahrzeug, insbesondere in einem Nutzfahrzeug, geeignet ist,
wobei das Fahrzeug eine Ausgabeeinrichtung (4) zur Ausgabe der wenigstens einen Information an den Fahrer (3), sowie eine in die Ausgabeeinrichtung (4) integrierte Steuerungseinrichtung (5) aufweist, wobei als Information wenigstens eine Handlungsempfehlung, die zur Umsetzung der gewünschten Fahrweise geeignet ist, ausgegeben wird, und wobei die Steuerungseinrichtung (5), die zur Bestimmung der auszugebenden Information benötigten Fahrwegsinformationen, Verkehrsinformationen und fahrzeugspezifischen Kenngrößen und Messwerte umfasst, auswertet und mittels der Ausgabeeinrichtung (4) ausgibt,
aufweisend die Schritte:
a) Definieren der gewünschten verbrauchsoptimierten Fahrweise, wobei die Definition der Fahrweise durch Aktivierung einer einzelnen in der Steuerungseinrichtung (5) hinterlegten verbrauchsoptimierten Fahrweise oder durch Auswahl einer verbrauchsoptimierten Fahrweise aus einer Mehrzahl von, in der Steuerungseinrichtung (5), hinterlegten verbrauchsoptimierten Fahrweisen erfolgt;
b) Erkennen einer räumlich umgrenzten zukünftigen Situation durch die Steuerungseinrichtung (5), bei der ein Bereich bis 1000 m vor dem Fahrzeug erfasst wird, oder Erkennen einer zeitlich umgrenzten zukünftigen Situation durch die Steuerungseinrichtung (5), bei der ein Bereich bis 60 Fahrsekunden vor dem Fahrzeug erfasst wird;
c) Bestimmen wenigstens eines ersten Ist-Parameters, wobei als wenigstens ein erster Ist-Parameter der Treibstoffverbrauch erfasst wird, der unter Beibehaltung der bisherigen Fahrweise für die erkannte zukünftige Situation zu erwarten ist, wobei zur Bestimmung des ersten Parameters nur fahrzeugspezifische Kenngrößen oder Messwerte, Fahrwegsinformationen und Verkehrsinformationen verwendet werden;
d) Bestimmen wenigstens eines zweiten Ziel-Parameters für diese Situation, wobei als wenigstens ein zweiter Ziel-Parameter der Treibstoffverbrauch erfasst wird, der sich bis zum Ende der erkannten Situation einstellt, wenn die wenigstens eine Information durch den Fahrer vollständig umgesetzt wird, wobei zur Bestimmung des zweiten Parameter nur fahrzeugspezifische Kenngrößen oder Messwerte, Fahrwegsinformationen und Verkehrsinformationen verwendet werden;
e) Bilden wenigstens einer Differenz aus dem ersten und zweiten Parameter;
f) Wenn eine Abweichung vom zweiten Ziel-Parameter festgestellt wird, ausgeben der wenigstens einer Information an den Fahrer (3) durch die Ausgabeeinrichtung (4) in Abhängigkeit von der wenigstens räumlich oder zeitlich umgrenzten zukünftigen Situation.

2. Verfahren nach einem der vorhergehenden Ansprüche, **dadurch gekennzeichnet, dass** als Information auch ein Status oder eine Motivation, wobei die Motivation Informationen enthält, die den Fahrer zum Befolgen einer Handlungsempfehlung veranlassen und somit die Einhaltung der gewünschten Fahrweise bewirken, ausgegeben wird.

3. Verfahren nach einem der vorhergehenden Ansprüche, **dadurch gekennzeichnet, dass** als Handlungsempfehlung zumindest eine Schaltempfehlung, Beschleunigungsempfehlung oder Geschwindigkeitsempfehlung ausgegeben wird.

4. Verfahren nach Anspruch 2, **dadurch gekennzeichnet, dass** als Motivation wenigstens ein absoluter Wert ausgegeben wird.

5. Verfahren nach einem der vorhergehenden Ansprüche, **dadurch gekennzeichnet, dass** bei Geschwindigkeiten von ungleich Null ausschließlich fahrspezifische Informationen ausgegeben werden.

6. Verfahren nach einem der vorhergehenden Ansprüche, **dadurch gekennzeichnet, dass** das Verfahren fahrerspezifisch und/oder fahrzeugspezifisch ausgeführt wird.

7. Verfahren nach einem der vorhergehenden Ansprüche, **dadurch gekennzeichnet, dass** von der zukünftigen Situation ein Bereich bis 500 Meter oder 30 Fahrsekunden vor dem Fahrzeug erfasst wird.

8. Nutzfahrzeug (1) mit einer Steuerungs- (5) und einer Ausgabeeinrichtung (4), die angepasst sind, zur Ausführung des Verfahrens nach Anspruch 1.

## Claims

1. Method for outputting at least one item of information to a driver (3), which information is suitable for implementing a defined and desired consumption-optimized driving style in a vehicle, in particular in a utility vehicle,
wherein the vehicle has an output device (4) for outputting the at least one item of information to the driver (3), and a control device (5) which is integrated into the output device (4),
wherein at least one action recommendation which is suitable for implementing the desired driving style is output as information, and wherein the control device (5) comprises and evaluates the route information, traffic information and vehicle-specific characteristic variables and measurement values required to determine the information which is to be output, and outputs said information by means of the output device (4),
having the steps of:
a) defining the desired consumption-optimized driving style, wherein the definition of the driving style is carried out by activating an individual consumption-optimized driving style which is stored in the control device (5) or by selecting a consumption-optimized driving style from a multiplicity of consumption-optimized driving styles which are stored in the control device (5);
b) detecting a spatially bounded future situation by means of the control device (5), in which situation an area up to 1000 m in front of the vehicle is sensed, or detecting a chronologically bounded future situation by means of the control device (5), in which situation an area up to 60 driving seconds in front of the vehicle is sensed;
c) determining at least one first actual parameter, wherein the fuel consumption which is to be expected for the detected future situation while maintaining the existing driving style is acquired as at least one first actual parameter, wherein only traffic-specific characteristic variables or measurement values, route information and traffic information are used to determine the first parameter;
d) determining at least one second target parameter for this situation, wherein the fuel consumption, which occurs up to the end of the detected situation if the at least one item of information is completely implemented by the driver, is acquired as at least one second target parameter, wherein only vehicle-specific characteristic variables or measurement values, route information and traffic information are used to determine the second parameter;
e) forming at least one difference from the first and second parameters;
f) if a deviation from the second target parameter is detected outputting the at least one item of information to the driver (3) by means of the output device (4) in accordance with the future situation which is bounded at least spatially or chronologically.

2. Method according to one of the preceding claims, **characterized in that** a status or a motivation is also output as information, wherein the motivation contains information which causes the driver to pursue an action recommendation and therefore brings about compliance with the desired driving style.

3. Method according to either of the preceding claims, **characterized in that** at least one switching recommendation, acceleration recommendation or speed recommendation is output as the action recommendation.

4. Method according to Claim 2, **characterized in that** at least one absolute value is output as the motivation.

5. Method according to one of the preceding claims, **characterized in that** exclusively driving-specific information is output at speeds which are unequal to zero.

6. Method according to one of the preceding claims, **characterized in that** the method is executed in a driver-specific and/or vehicle-specific fashion.

7. Method according to one of the preceding claims, **characterized in that** an area of the future situation of up to 500 metres or 30 driving seconds in front of the vehicle is sensed.

8. Utility vehicle (1) having a control device (5) and an output device (4) which are adapted to execute the method according to Claim 1.

## Revendications

1. Procédé permettant de sortir à destination d'un conducteur (3) au moins une information qui est adaptée pour mettre en oeuvre un mode de conduite défini et souhaité, à consommation optimisée, dans un véhicule, en particulier dans un véhicule utilitaire,
le véhicule présentant un dispositif de sortie (4) pour sortir ladite au moins une information à destination du conducteur (3), ainsi qu'un dispositif de commande (5) intégrée dans le dispositif de sortie (4),
dans lequel au moins une recommandation qui est adaptée pour mettre en oeuvre le mode de conduite souhaité est sortie en tant qu'information, et dans lequel le dispositif de commande (5) comprend, évalue et sort au moyen du dispositif de sortie (4) les informations de trajet, les informations de trafic et les caractéristiques et valeurs de mesure spécifiques au véhicule, nécessaires à la détermination de l'information à sortir,
présentant les étapes consistant à :
a) définir le mode de conduite à consommation optimisée souhaité, la définition du mode de conduite étant effectuée par l'activation d'un seul mode de conduite à consommation optimisée, mémorisé dans le dispositif de commande (5), ou par la sélection d'un mode de conduite à consommation optimisée parmi une pluralité de modes de conduite à consommation optimisée, mémorisés dans le dispositif de commande (5) ;
b) identifier une situation future délimitée dans l'espace, par le dispositif de commande (5), dans laquelle une plage jusqu'à 1000 m devant le véhicule est détectée, ou identifier d'une situation future délimitée dans le temps, par le dispositif de commande (5), dans laquelle une plage de 60 secondes de conduite devant le véhicule est détectée ;
c) déterminer au moins un premier paramètre réel, la consommation de carburant, qui est attendue en maintenant le mode de conduite précédent pour la situation future identifiée, étant détectée comme au moins un premier paramètre réel, dans lequel, pour la détermination du premier paramètre, uniquement des grandeurs caractéristiques ou valeurs de mesure, des informations de trajet et des informations de trafic spécifiques au véhicule sont utilisées ;
d) déterminer au moins un deuxième paramètre cible pour cette situation, la consommation de carburant, qui est atteinte jusqu'à la fin de la situation identifiée si ladite au moins une information est mise en oeuvre complètement par le conducteur, étant détectée comme au moins un deuxième paramètre cible, dans lequel, pour la détermination du deuxième paramètre, uniquement des grandeurs caractéristiques ou valeurs de mesure, des informations de trajet et des informations de trafic spécifiques au véhicule sont utilisées ;
e) former au moins une différence à partir du premier et du deuxième paramètre ;
f) si un écart par rapport au deuxième paramètre cible est constaté, sortir ladite au moins une information à destination du conducteur (3) par le dispositif de sortie (4) en fonction de ladite au moins une situation future délimitée dans l'espace ou dans le temps.

2. Procédé selon l'une quelconque des revendications précédentes, **caractérisé en ce qu'**un état et ou une motivation est également sorti(e) en tant qu'information, la motivation contenant des informations qui amènent le conducteur à suivre une recommandation et provoquent ainsi le respect du mode de conduite souhaité.

3. Procédé selon l'une quelconque des revendications précédentes, **caractérisé en ce qu'**au moins un changement de vitesse recommandé, une accélération recommandée ou une vitesse recommandée est sortie en tant que recommandation.

4. Procédé selon la revendication 2, **caractérisé en ce qu'**au moins une valeur absolue est sortie en tant que motivation.

5. Procédé selon l'une quelconque des revendications précédentes, **caractérisé en ce que** pour des vitesses différentes de zéro, exclusivement des informations spécifiques au véhicule sont sorties.

6. Procédé selon l'une quelconque des revendications précédentes, **caractérisé en ce que** le procédé est effectué de manière spécifique au conducteur et/ou de manière spécifique au véhicule.

7. Procédé selon l'une quelconque des revendications précédentes, **caractérisé en ce que** la situation future détecte une plage jusqu'à 500 mètres ou 30 secondes de conduite devant le véhicule.

8. Véhicule utilitaire (1) comprenant un dispositif de commande (5) et un dispositif de sortie (4) qui sont adaptés pour effectuer le procédé selon la revendication 1.
